# EUROPEAN PATENT APPLICATION

(11) **EP 4 770 262 A1**
(43) Date of publication of application: **01.07.2026**
(21) Application number: 24876166.0
(22) Date of filing: 22.07.2024
(51) Int. Cl.: H04W 76/10

(54) **COMMUNICATION METHOD**

(30) Priority: 13.10.2023 CN 202311328000
(71) Applicant: Honor Device Co., Ltd., Shenzhen, Guangdong 518040 (CN)
(72) Inventor: WEI, Zhenrong, Shenzhen, Guangdong 518040 (CN)
(74) Representative: Goddar, Heinz J.
(86) International application number: PCT/CN2024/106785
(87) International publication number: WO 2025/077345

(57) **Abstract**

Embodiments of this application provide a communication method, and relate to the field of communication technologies. The method prevents an electronic device from entering an RRC connection reestablishment procedure, so that UE can complete an RRC connection reconfiguration procedure. The method includes: A first configuration message is received, where the first configuration message includes a third CA combination. The first configuration message is used for configuring the third CA combination for the terminal. When the third CA combination is not supported by the terminal, a first update request is sent, to trigger a first base station to query a frequency band and a CA combination that are supported by the electronic device. A first query message is received. In response to a first capability query message, first capability information is sent. The first capability information does not include a fourth CA combination, and the fourth CA combination includes a first CA combination or the third CA combination.

## Description

This application claims priority to Chinese Patent Application No. 202311328000.X, filed with the China National Intellectual Property Administration on October 13, 2023 and entitled "COMMUNICATION METHOD", which is incorporated herein by reference in its entirety.

### TECHNICAL FIELD

This application relates to the field of communication technologies, and in particular, to a communication method.

### BACKGROUND

Currently, user equipment (user equipment, UE) may establish a radio resource control (radio resource control, RRC) connection with a nearby access network device by initiating an RRC connection establishment procedure. When the UE supports and enables a carrier aggregation (carrier aggregation, CA) capability, CA configuration may be performed between the UE and the access network device by using an RRC connection reconfiguration procedure based on the RRC connection.

For example, the access network device may send an RRC connection reconfiguration message to the UE, and the RRC connection reconfiguration message carries the CA configuration. The CA configuration may include at least one CA combination. Correspondingly, after receiving the RRC connection reconfiguration message, the UE performs a protocol check on the CA configuration carried in the RRC connection reconfiguration message.

In some implementations, the protocol check performed by the UE on the CA configuration fails, resulting in a failure of an RRC connection reconfiguration procedure, and entering an RRC connection reestablishment procedure. This causes interruption of communication of the UE, and affects user experience.

### SUMMARY

Embodiments of this application provide a communication method, to prevent UE from entering an RRC connection reestablishment procedure because a protocol check of a CA configuration fails, so that the UE can complete an RRC connection reconfiguration procedure.

To achieve the foregoing objectives, the embodiments of this application adopt the following technical solutions.

According to a first aspect, a communication method is provided. The method is applied to a terminal, and carrier aggregation CA combinations supported by the terminal include a first CA combination and a second CA combination. A first radio resource control RRC connection is established between the terminal and a first access network device. The method includes: A first configuration message is received, where the first configuration message includes a third CA combination. The first configuration message is used for configuring the third CA combination for the terminal. When the third CA combination is not supported by the terminal, a first update request is sent. The first update request is used for triggering the first access network device to query a frequency band and a CA combination that are supported by the terminal. A first query message is received. The first query message is used for querying a frequency band and CA combination supported by the terminal. In response to the first query message, first capability information is sent. The first capability information does not include a fourth CA combination, and the fourth CA combination includes the first CA combination or the third CA combination.

In this application, after receiving the first configuration message, the terminal may further perform a protocol check on the third CA combination. When the third CA combination is not supported by the terminal, the terminal fails to perform the protocol check on the third CA combination.

Based on the foregoing solution, when the third CA combination is not supported by the terminal, the terminal triggers, by initiating the first update request to the first access network device, the first access network device to query a frequency band and a CA combination that are supported by the terminal. The terminal reports the supported frequency band and CA combination by sending the first capability information. The first capability information does not include the fourth CA combination, and the fourth CA combination includes the third CA combination not supported by the terminal or the first CA combination supported by the terminal. That is, the CA combination supported by the terminal are included in first terminal capability information. In this way, based on the first capability information, the first access network device does not subsequently configure an unsupported CA combination for the terminal, to prevent the terminal from entering an RRC connection reestablishment procedure, so that the terminal maintains normal communication.

Optionally, the first configuration message includes a first RRC connection reconfiguration message. The first update request includes a first tracking area update request. The first query message includes a first terminal capability query message. The first capability information includes first terminal capability information.

Optionally, that the third CA combination is not supported by the terminal includes: The third CA combination includes a frequency band not supported by the terminal.

Alternatively, the third CA combination is included in a CA combination not supported by the terminal.

Optionally, the frequency band supported by the terminal includes a first frequency band and a second frequency band, and a frequency band of the third CA combination includes the second frequency band and a third frequency band. The terminal does not support the third frequency band. The first capability information further does not include a fourth frequency band. The fourth frequency band includes the first frequency band or the third frequency band. That is, the first capability information includes the frequency band and the CA combination supported by the terminal. In this way, the first access network device does not subsequently configure an unsupported CA combination for the terminal based on the first capability information, to avoid that UE fails to perform a protocol check on the CA combination, and further avoid communication interruption caused by entering an RRC connection reestablishment procedure.

Optionally, the first capability information includes the second CA combination. After the first capability information is sent, the method further includes: A second RRC connection reconfiguration message is received, where the second RRC connection reconfiguration message includes the second CA combination. Because the second CA combination is a CA combination supported by the terminal, the terminal subsequently successfully performs a protocol check on the second CA combination. In this way, the terminal can complete an RRC connection reconfiguration procedure, so that the terminal maintains normal communication.

Optionally, after the first capability information is sent, the method further includes: A third RRC connection reconfiguration message is received, where the third RRC connection reconfiguration message includes the third CA combination. In response to the third RRC connection reconfiguration message, a protocol check performed on the third CA combination fails. A second tracking area update request is sent. The second tracking area update request is used for triggering the first access network device to query a frequency band and a CA combination that are supported by the terminal. A second terminal capability query message is received. The second terminal capability query message is used for instructing the terminal to report the supported frequency band and CA combination. In response to the second terminal capability query message, second terminal capability information is sent. The second terminal capability information does not include the second CA combination and the fourth CA combination.

Based on the foregoing solution, after the protocol check on the third CA combination carried in the third RRC connection reconfiguration message fails, the terminal triggers, by initiating the second tracking area update request to the first access network device, the first access network device to query a frequency band and a CA combination that are supported by the terminal. The terminal reports the supported frequency band and CA combination by sending the second end capability information. The second terminal capability information does not include the second CA combination and the fourth CA combination. That is, the CA combinations are not included in the second terminal capability information. In this way, the first access network device does not subsequently configure the CA combination for the terminal based on the second terminal capability information, to prevent the terminal from performing a protocol check on the CA combination, and further enable the terminal to complete an RRC connection reconfiguration procedure and maintain normal communication.

Optionally, a frequency bands supported by the UE includes a first frequency band and a second frequency band, and a frequency band of the third CA combination includes the second frequency band and a third frequency band. The terminal does not support the third frequency band. After the first capability information is sent, the method further includes: A fourth RRC connection reconfiguration message is received, where the fourth RRC connection reconfiguration message includes the third CA combination. In response to the fourth RRC connection reconfiguration message, the protocol check performed on the third CA combination fails. A third tracking area update request is sent. The third tracking area update request is used for triggering the first access network device to query a frequency band and a CA combination that are supported by the terminal. A third terminal capability query message is received. The third terminal capability query message is used for instructing the terminal to report the supported frequency band and CA combination. In response to the third terminal capability query message, third terminal capability information is sent. The third terminal capability information does not include a fourth frequency band and the fourth CA combination. The fourth frequency band includes the first frequency band or the third frequency band.

Based on the foregoing solution, after the protocol check performed on the third CA combination carried in the fourth RRC connection reconfiguration message fails, the terminal triggers, by initiating the third tracking area update request to the first access network device, the first access network device to query a frequency band and a CA combination that are supported by the terminal. The terminal reports the supported frequency band and CA combination by sending the third end capability information. The third terminal capability information does not include the fourth frequency band and the fourth CA combination. The fourth frequency band includes the first frequency band supported by the terminal or the third frequency band not supported by the terminal. That is, the second terminal capability information includes a frequency band and a CA combination that are supported by the terminal. In this way, the first access network device does not subsequently configure an unsupported CA combination for the terminal based on the third terminal capability information, to prevent the terminal from performing a protocol check on the CA combination, and further enable the terminal to complete an RRC connection reconfiguration procedure and maintain normal communication.

Optionally, the third terminal capability information includes the second CA combination. After the third terminal capability information is sent, the method further includes: A fifth RRC connection reconfiguration message is received, where the fifth RRC connection reconfiguration message includes the second CA combination. Because the second CA combination is a CA combination supported by the terminal, the terminal subsequently successfully performs a protocol check on the second CA combination. In this way, the terminal can complete an RRC connection reconfiguration procedure, so that the terminal maintains normal communication.

Optionally, after the third terminal capability information is sent, the method further includes: A sixth RRC connection reconfiguration message is received, where the sixth RRC connection reconfiguration message includes the third CA combination. In response to the sixth RRC connection reconfiguration message, the protocol check performed on the third CA combination fails. A fourth tracking area update request is sent. The fourth tracking area update request is used for triggering the first access network device to query a frequency band and a CA combination that are supported by the terminal. A fourth terminal capability query message is received. The fourth terminal capability query message is used for instructing the terminal to report the supported frequency band and CA combination. In response to the fourth terminal capability query message, fourth terminal capability information is sent. The fourth terminal capability information does not include the second CA combination and the fourth CA combination.

Based on the foregoing solution, after the protocol check performed on the third CA combination carried in the sixth RRC connection reconfiguration message fails, the terminal triggers, by initiating the fourth tracking area update request to the first access network device, the first access network device to query a frequency band and a CA combination that are supported by the terminal. The terminal reports the supported frequency band and CA combination by sending the fourth end capability information. The fourth terminal capability information does not include the second CA combination and the fourth CA combination. That is, the CA combinations are not included in the second terminal capability information. In this way, the first access network device does not subsequently configure the CA combination for the terminal based on the fourth terminal capability information, to prevent the terminal from performing a protocol check on the CA combination, and further enable the terminal to complete an RRC connection reconfiguration procedure and maintain normal communication.

Optionally, the first capability information alternatively does not include the second CA combination. That is, the CA combinations are not included in the first capability information. In this way, the first access network device does not subsequently configure the CA combination for the terminal based on the first capability information, to prevent the terminal from performing a protocol check on the CA combination, and further enable the terminal to complete an RRC connection reconfiguration procedure and maintain normal communication.

Optionally, after the first capability information is sent, the method further includes: A first tracking area update accept message is received. A first tracking area update complete message is sent.

Optionally, before the first RRC connection reconfiguration message is received, the method further includes: A first attach request is sent. The first attach request is used for triggering the first access network device to query a frequency band and a CA combination that are supported by the terminal. A fifth terminal capability query message is received. The fifth terminal capability query message is used for instructing the terminal to report the supported frequency band and CA combination. In response to the fifth terminal capability query message, fifth terminal capability information is sent. The fifth terminal capability information includes the second frequency band, the fourth frequency band, the second CA combination, and the fourth CA combination.

Optionally, after the fifth terminal capability information is sent, the method further includes: A first attach accept message. A first attach complete message is sent.

According to a second aspect, a communication method is provided. The method is applied to a terminal, and a first radio resource control RRC connection is established between the terminal and a first access network device. The method includes: A first configuration message is received, where the first configuration message includes a fifth CA combination. The first configuration message is used for configuring the fifth CA combination for the terminal; and a first configuration complete message is sent when the fifth CA combination is not supported by the terminal.

Based on the foregoing solution, a first RRC connection reconfiguration complete message is sent when the fifth CA combination is not supported by the terminal. The first RRC connection reconfiguration complete message may indicate that an RRC connection reconfiguration procedure ends successfully. In this way, the terminal is prevented from entering an RRC connection reestablishment procedure, so that the terminal maintains normal communication.

Optionally, frequency bands of the fifth CA combination include a fifth frequency band and a sixth frequency band. That the fifth CA combination is not supported by the terminal includes: The fifth frequency band or the sixth frequency band are not supported. Alternatively, the fifth frequency band and the sixth frequency band are supported, and the fifth CA combination is included in CA combinations not supported by the terminal.

Optionally, after the first configuration complete message is sent, the method further includes: A first activation instruction is received. The first activation instruction is used for instructing to activate the fifth CA combination. In response to the first activation instruction, the fifth CA combination is kept in an inactive state. In this way, after receiving a first MAC control unit activation instruction, the terminal does not activate the fifth CA combination on which a check fails to be performed.

Optionally, the first configuration message includes a first RRC connection reconfiguration message. The first configuration complete message includes a first RRC connection reconfiguration complete message.

According to a third aspect, a terminal is provided. The terminal includes a memory and one or more processors. The memory is coupled to the processor. The memory is configured to store computer program code. The computer program code includes computer instructions. When the processor executes the computer instructions, the terminal is enabled to perform the communication method provided in the first aspect and any possible design thereof, or the communication method provided in the second aspect and any possible design thereof.

According to a fourth aspect, a chip system is provided. The chip system includes a processor and a communication interface. The processor is configured to invoke, from a storage medium, a computer program stored in the storage medium and run the computer program, to perform the communication method provided in the first aspect and any possible design thereof, or the communication method provided in the second aspect and any possible design thereof.

Optionally, the chip system corresponds to a modem modem in a terminal.

According to a fifth aspect, a computer-readable storage medium is provided. The computer-readable storage medium includes computer instructions. When the computer instructions are run, the communication method provided in the first aspect and an optional design thereof, or the communication method provided in the second aspect and any possible design thereof is performed.

According to a sixth aspect, a computer program product is provided. The computer program includes instructions. When a computer runs the instructions, the communication method provided in the first aspect and an optional design thereof, or the communication method provided in the second aspect and any possible design thereof is performed.

It should be understood that, the technical solutions provided in the third aspect to the sixth aspect above can respectively correspond to the interface display method provided in the foregoing designs, and similar beneficial effects can be obtained. Details are not described herein again.

### BRIEF DESCRIPTION OF DRAWINGS

FIG. 1 is a schematic diagram of a communication method;
FIG. 2 is a schematic diagram of an interaction procedure of a communication method;
FIG. 3 is a schematic diagram of an interaction procedure in which an RRC connection reconfiguration succeeds;
FIG. 4 is a schematic diagram of an interaction procedure in which an RRC connection reconfiguration fails;
FIG. 5 is a schematic diagram of an interaction procedure of a communication method according to an embodiment of this application;
FIG. 6 is a schematic diagram of an interaction procedure of another communication method according to an embodiment of this application;
FIG. 7 is a schematic diagram of an interaction procedure of another communication method according to an embodiment of this application;
FIG. 8 is a schematic diagram of an interaction procedure of another communication method according to an embodiment of this application;
FIG. 9 is a schematic diagram of an interaction procedure of another communication method according to an embodiment of this application;
FIG. 10 is a schematic diagram of an interaction procedure of another communication method according to an embodiment of this application;
FIG. 11 is a schematic diagram of composition of a chip module in a terminal according to an embodiment of this application.
FIG. 12 is a schematic diagram of composition of a terminal according to an embodiment of this application; and
FIG. 13 is a schematic diagram of composition of a chip system according to an embodiment of this application.

### DESCRIPTION OF EMBODIMENTS

Terms "first" and "second" mentioned below are merely intended for a purpose of description, and shall not be understood as an indication or implication of relative importance or implicit indication of a quantity of indicated technical features. Therefore, features defining "first" and "second" may explicitly or implicitly include one or more of the features. In descriptions of embodiments, unless otherwise specified, "a plurality of' means two or more.

The technical solutions provided in the embodiments of this application may be applied to wireless communication networks such as a long term evolution advanced (long term evolution advanced, LTE-A for short) system, a new radio (New Radio, NR) network of a 5th generation mobile communication technology (5th Generation Mobile Communication Technology, 5G), and a network of a 6th generation mobile communication technology (6th generation mobile networks, 6G). Terms "network" and "system" are interchangeable.

In the embodiments of this application, the access network device may be a base station (base station, BS for short), or the access network device may be a device that communicates with user equipment (user equipment, UE for short) or another communication station such as a relay station. The access network device may provide communication coverage of a specific physical area. For example, the access network device may be specifically an evolved NodeB (Evolutional Node B, eNB or eNodeB for short) in LTE-A, may alternatively be a next generation NodeB (next generation Node B, gNB for short) in 5G NR, or may be another access network device that provides access services in the wireless communication network. This is not limited in this application.

The wireless communication network such as LTE-A and NR may improve transmission rates of a downlink (down link, DL) and/or an uplink (up link, UL) in the network through carrier aggregation (Carrier Aggregation, CA). The CA may include at least two carrier units. The at least two carrier units may include a primary carrier and at least one secondary carrier. By aggregating the at least two carrier units (Component Carriers, CCs), a transmission bandwidth of the wireless communication network can be increased, thereby improving the transmission rates of the DL and/or the UL in the network.

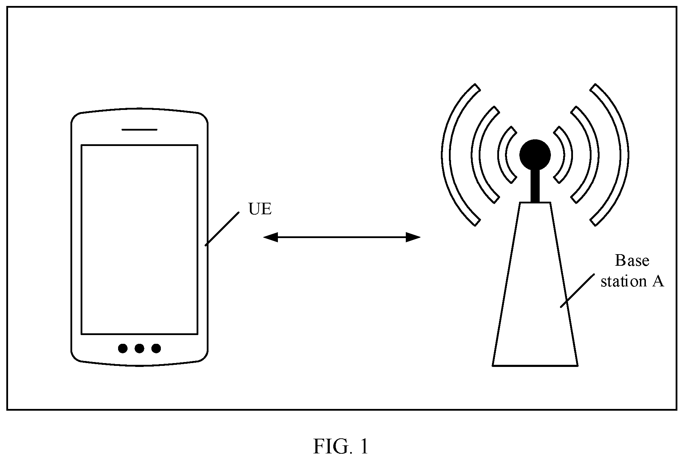

Exemplarily, refer to FIG. 1. An example in which the UE is a mobile phone is used. When the UE is turned on and a subscriber identity module (subscriber identity module, SIM) card is inserted, the UE may interact with a nearby base station A. When the UE supports a CA capability, an interaction procedure between the UE and the base station A includes a CA configuration procedure. The CA configuration procedure includes adding at least one secondary cell for the UE. The secondary cell is a cell operating in a secondary carrier frequency band, and is configured to provide additional radio resources.

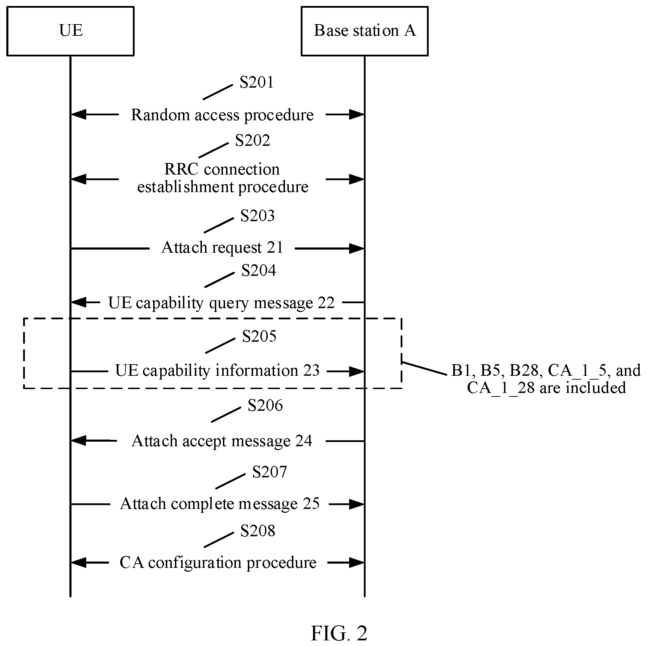

An LTE-A network and a scenario of FIG. 1 are used as an example. Refer to FIG. 2. By performing interaction shown in FIG. 2, the UE and the base station A may establish an RRC connection. After the RRC connection is established, the base station A may further initiate the CA configuration procedure, based on the RRC connection, to the UE supporting the CA capability.

As shown in FIG. 2, the interaction procedure between the UE and the base station A may include the following steps:
S201: The UE initiates a random access procedure to the base station A.

Exemplarily, the UE may send a random access request to the base station A through a random access channel (Random Access Channel, RACH). Correspondingly, under an instruction of the base station A, the UE may access a target cell through the random access procedure, to subsequently interact with the base station A based on the target cell.

S202: The UE initiates an RRC connection establishment procedure to the base station A.

Exemplarily, the UE may initiate the RRC connection establishment procedure to the base station A based on the target cell accessed in S201.

For example, the UE sends an RRC connection establishment request to the base station A based on the target cell. The RRC connection establishment request may be RRCConnectionRequest.

Correspondingly, after the RRC connection establishment procedure shown in S202 in FIG. 2 is entered, the base station A makes a response.

For example, after receiving the RRC connection establishment request, the base station A sends an RRC connection establishment message (for example, RRCConnectionsetup) to the UE. In some implementations, an RRC connection establishment message 22 may carry signaling radio bearer (Signalling Radio Bearer, SRB1) information, and the like.

Then, the UE may perform an RRC connection establishment based on the RRC connection establishment message. For example, the UE may establish an SRB1 based on the SRB1 information carried in the RRC connection establishment message. The SRB1 is a transmission channel of an RRC signaling message.

After completing the RRC connection establishment, the UE feeds back an RRC connection establishment complete message to the base station A. For example, the RRC connection establishment complete message may be RRCConnectionComplete.

In this application, an attach (Attach) procedure may further be triggered after the RRC connection establishment is completed.

In a specific example, the attach procedure includes interaction operations in S203 to S207.

S203: The UE sends an attach request 21 to the base station A.

In this example, the UE may initiate the attach procedure to the base station A through the attach request 21.

For example, the UE may send the attach request 21 to the base station A based on the RRC connection established in S202. The attach request 21 may be AttachRequest.

In some embodiments of this application, the attach request 21 may also be referred to as a first attach request.

S204: The base station A sends a UE capability query message 22 to the UE.

In this embodiment of this application, after receiving the attach request 21, the base station A may initiate a UE capability query procedure to the UE. Specifically, the base station A may initiate the UE capability query procedure through the UE capability query message 22 (for example, UECapabilityEnquiry).

In some other embodiments of this application, the UE capability query message 22 may also be referred to as a fifth terminal capability query message.

S205: The UE returns UE capability information 23 to the base station A.

Exemplarily, after receiving the UE capability query message 22, the UE feeds back the UE capability information 23 (for example, UECapabilityInformation) to the base station A. The UE capability information 23 includes an operating frequency band supported by the UE and a supported CA combination.

In some other embodiments of this application, the UE capability information 23 may also be referred to as fifth terminal capability information.

An example in which the operating frequency band supported by the UE includes B1, B5, and B28, and the CA combination includes CA_1_5 and CA_1_28 is used. B1, B5, B28, CA_1_5, and CA_1_28 may be carried by the UE in the UE capability information 23, and are sent to the base station A. CA_1_5 corresponds to carrier aggregation of B1 and B5, and CA_1_28 corresponds to carrier aggregation of B1 and B28.

It should be noted that on a UE side, B28 may include B28A or B28B.

In an implementation, the UE supports B28A in B28. Correspondingly, the UE supports carrier aggregation of B1 and B28A.

In another implementation, the UE supports B28B in B28. Correspondingly, the UE supports carrier aggregation of B1 and B28B.

Descriptions are provided below by using the first implementation as an example.

S206: The base station A sends an attach accept message 24 to the UE.

In some embodiments of this application, the attach accept message 24 may also be referred to as a first attach accept message.

S207: The UE returns an attach complete message 25 to the base station A.

Exemplarily, after the UE capability query is completed, the base station A sends the attach accept message 24 (for example, AttachAccept) to the UE.

Correspondingly, after receiving the attach accept message 24, the UE may feed back the attach complete message 25 (for example, AttachComplete) to the base station A.

In some embodiments of this application, the attach complete message 25 may also be referred to as a first attach complete message.

It should be noted that, in the attach procedures from S203 to S207 shown in FIG. 2, for messages sent by the UE and received by the base station A, such as S203, S205, and S207, the base station A may also directly transparently transmit the messages to a control node MME of the LTE-A network. Correspondingly, messages returned by the base station A to the UE, such as S204 and S206, are first sent to the base station A by the MME, and then are transparently transmitted to the UE by the base station A.

For example, using the interaction in S203 and S204 as an example, the UE sends the attach request 21 to the base station A. In response to the attach request 21, the base station A transparently transmits the attach request 21 to the MME.

Correspondingly, after receiving the attach request 21, the MME returns the UE capability query message 22 to the base station A. In response to the UE capability query message 22, the base station A transparently transmits the UE capability query message 22 to the UE.

In some other embodiments, the attach procedures further include procedures such as UE identity verification and authentication. For specific execution, refer to relevant regulations on the attach procedures in 3GPP TS 24.301.

S208: The base station A initiates a CA configuration procedure to the UE.

Exemplarily, after the attach procedure ends, the base station A may initiate the CA configuration procedure to the UE and configure a CA combination for the UE based on an operating frequency band and a CA combination that are supported by the UE and that are in the UE capability information 23 and based on the foregoing established RRC connection.

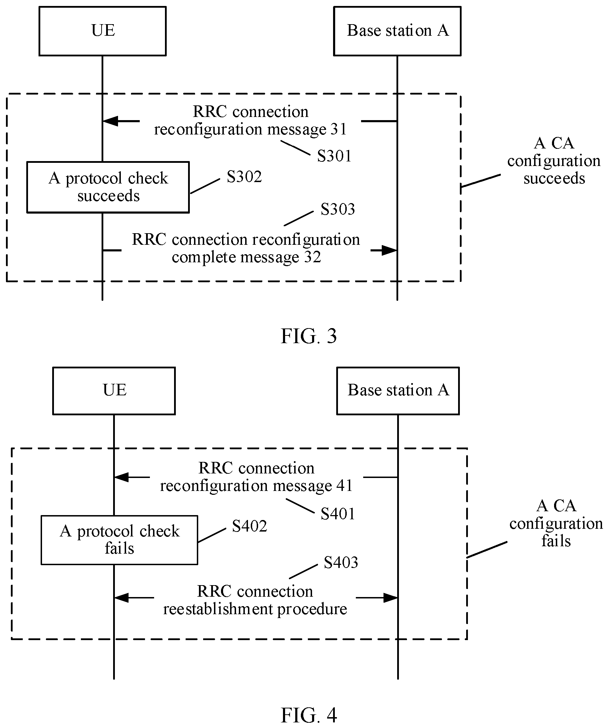

In this embodiment of this application, the base station A may configure the CA combination for the UE by initiating an RRC connection reconfiguration procedure to the UE. FIG. 3 is a schematic diagram of interaction of an RRC connection reconfiguration procedure. FIG. 3 shows a specific example of a successful CA configuration in the RRC connection reconfiguration procedure. As shown in FIG. 3, the RRC connection reconfiguration procedure may include:

S301: The base station A sends an RRC connection reconfiguration message 31 to the UE.

Exemplarily, the RRC connection reconfiguration message 31 may be RRCConnectionReconfiguration. Based on the capability information (the operating frequency bands and the CA combinations supported by the UE) reported by the UE in S205, the base station A sends the RRC connection reconfiguration message 31 to the UE. The RRC connection reconfiguration message 31 carries a CA configuration 1. The CA configuration 1 may include at least one CA combination.

For example, an example in which the capability information reported by the UE is the UE capability information 23 is used, and the CA configuration 1 may include a CA combination 1. The CA combination 1 includes carrier aggregation of B1 and B28A. The base station A may send the RRC connection reconfiguration message 31 carrying the CA combination 1 to the UE.

S302: The UE successfully performs a protocol check based on the RRC connection reconfiguration message 31.

Exemplarily, after receiving the RRC connection reconfiguration message 31, the UE performs a protocol check on the CA configuration 1 carried in the RRC connection reconfiguration message 31. When the CA configuration 1 satisfies the UE capability, the UE successfully performs the protocol check on the CA configuration 1.

For example, the UE may perform the protocol check on the CA combination 1 based on the RRC connection reconfiguration message 31. In this example, the CA combination 1 includes carrier aggregation of B1 and B28A, and the CA combination 1 is a CA combination supported by the UE. Correspondingly, the UE successfully performs the protocol check on the CA combination 1.

S303: The UE sends an RRC connection reconfiguration complete message 32 to the base station A.

Exemplarily, after successfully performing the protocol check on the CA configuration 1, the UE sends, to the base station A, the RRC connection reconfiguration complete message 32 indicating that an RRC connection reconfiguration succeeds. The RRC connection reconfiguration complete message 32 may include RRCReconfigurationComplete.

In this way, the current RRC connection reconfiguration procedure may be completed.

In the example of FIG. 3, descriptions are provided by using an example in which the UE successfully performs a protocol check based on the RRC connection reconfiguration message 31. In some other implementations, the protocol check performed by the UE based on the RRC connection reconfiguration message fails, and then the CA configuration for the UE fails. FIG. 4 is another schematic diagram of interaction of an RRC connection reconfiguration procedure. FIG. 4 shows a specific example of a failed CA configuration in the RRC connection reconfiguration procedure. As shown in FIG. 4, the RRC connection reconfiguration procedure may include:

S401: The base station A sends an RRC connection reconfiguration message 41 to the UE.

For specific execution of S401, refer to S301 in FIG. 3. The RRC connection reconfiguration message 41 may correspond to the RRC connection reconfiguration message 31.

In this example, an example in which the capability information reported by the UE is the UE capability information 23 is used. Based on the UE capability information 23, the base station A sends the RRC connection reconfiguration message 41 to the UE. The RRC connection reconfiguration message 41 carries a CA configuration 2. The CA configuration 2 includes at least one CA combination.

In some implementations, the CA configuration 2 may include a CA combination 2, and the CA combination 2 includes carrier aggregation of B1 and B28B. The base station A may send the RRC connection reconfiguration message 41 carrying the CA combination 2 to the UE.

S402: The UE fails to perform a protocol check based on the RRC connection reconfiguration message 41.

Exemplarily, after receiving the RRC connection reconfiguration message 41, the UE performs a protocol check on the CA configuration 2 carried in the RRC connection reconfiguration message 41.

For example, the UE may perform the protocol check on the CA combination 2 based on the RRC connection reconfiguration message 41. In this example, the CA combination 2 includes carrier aggregation of B1 and B28B. B28B is a frequency band not supported by the UE, and the CA combination 2 correspondingly is a CA combination not supported by the UE. In this case, the UE fails to perform the protocol check on the CA configuration 2 based on the RRC connection reconfiguration message 41.

When the UE determines that the protocol check fails, the current RRC connection reconfiguration procedure ends.

S403: The UE initiates an RRC connection reestablishment procedure to the base station A.

Exemplarily, the RRC connection reestablishment procedure may be an RRC connection reestablishment procedure.

For example, the UE may send an RRC connection reestablishment request 42 (for example, RRCReestablishmentRequest) to the base station A. A cause value carried in the RRC connection reestablishment request 42 may include: a reconfiguration failure (Reconfiguration failure).

Correspondingly, after the RRC connection reestablishment procedure shown in S403 in FIG. 4 is entered, the base station A makes a response.

For example, after receiving the RRC connection reestablishment request 42 whose cause value is "Reconfiguration failure", the base station A may search for context information of a current PDU session.

When the current base station A can obtain the context information of the current PDU session, the base station A may send an RRC reestablishment response 43 (for example, RRCReestablishment) to the UE. Then, the UE may perform RRC reestablishment based on the RRC reestablishment response 43, and feed back an RRC reestablishment complete message 44 (for example, RRCReestablishmentComplete) to the base station A.

When the current base station A cannot obtain the context information of the current PDU session, the base station A may send an RRC establishment message 45 (for example, RRCConnectionsetup) to the UE. Then, the UE may perform an RRC establishment based on the establishment message 45, and feed back an RRC establishment complete message 46 (for example, RRCSetupComplete) to the base station A.

For specific execution of the foregoing RRC connection reestablishment procedure, refer to relevant regulations on an RRC connection reestablishment in R16 of a 3GPP protocol. Details are not described herein.

It should be noted that the foregoing examples are all described by using B28 as an example. In some other embodiments, the UE supports some frequency points in B41, for example, B41A and a CA combination related to B41A. When the UE and the base station enter the RRC connection reconfiguration procedure, a protocol check may fail, thereby triggering the RRC connection reestablishment procedure.

It may be understood that, after the RRC connection reestablishment procedure ends, the base station A may initiate the RRC connection reconfiguration procedure to the UE again. According to the descriptions in FIG. 3 and FIG. 4, when initiating the RRC connection reconfiguration procedure to the UE, the base station A first sends the RRC connection reconfiguration message to the UE. In some implementations, the UE fails to perform the protocol check based on the RCC reconfiguration message (for example, the RRC connection reconfiguration message 41). In this case, the UE initiates the RRC connection reestablishment procedure to the base station A again, causes interruption of UE communication, and affects user experience.

To resolve the foregoing problem, the embodiments of this application provide a communication method. Based on the method, after the protocol check performed on the CA configuration fails, the UE may update the UE capability information to the access network device by initiating a tracking area update procedure. Based on the updated UE capability information, it can be avoided that in a subsequent RRC connection reconfiguration procedure, the UE enters the RRC connection reestablishment procedure because the protocol check performed on the CA configuration fails. Therefore, normal communication can be maintained on the UE side.

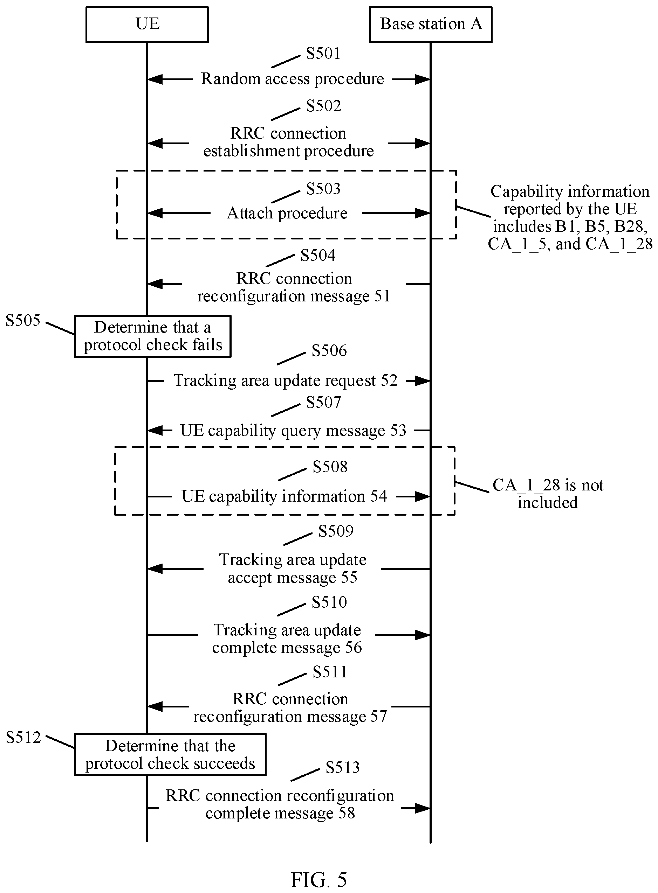

Exemplarily, refer to FIG. 5. The scenario shown in FIG. 1 is used as an example. A solution provided in the embodiments of this application is described by using an example. As shown in FIG. 5, the solution may include the following steps:
S501: The UE initiates a random access procedure to the base station A.

In some embodiments of this application, the base station A may also be referred to as a first access network device.

S502: The UE initiates an RRC connection establishment procedure to the base station A.

S503: The UE initiates an attach procedure to the base station A.

In this example, S501 and S502 respectively correspond to S201 and S202 shown in FIG. 2. For specific execution, refer to the descriptions in S201 and S202. For specific execution of S503, refer to S203 to S207 shown in FIG. 2. Details are not described herein again.

In the embodiments of this application, the UE reports UE capability information 50 to the base station A in the attach procedure of S503. An example in which a frequency band supported by the UE includes a first frequency band and a second frequency band, and a supported CA combination includes a first CA combination and a second CA combination is used, and the UE capability information 50 may include: the second frequency band, a fourth frequency band, the second CA combination, and a fourth CA combination. The fourth frequency band includes the first frequency band or a third frequency band, and the third frequency band is a frequency band not supported by the UE. The fourth CA combination includes the first CA combination or a third CA combination, and the third CA combination is a CA combination not supported by the UE. In addition, the frequency band supported by the UE may further include a fifth frequency band.

For example, the frequency band supported by the UE includes B1, B5, and B28A, and the CA combination supported by the UE includes CA_1_5 and CA_1_28. The first frequency band may be B28A, the second frequency band may be B1, the third frequency band may be B28B, the fourth frequency band may be B28, and the fifth frequency band may be B5. The first CA combination may be carrier aggregation of B1 and B28A, the second CA combination may be CA_1_5, that is, carrier aggregation of B1 and B5, the third CA combination may be carrier aggregation of B1 and B28B, and the fourth CA combination may be CA_1_28, that is, carrier aggregation of B1 and B28. The UE capability information 50 may include B1, B5, B28, CA_1_5, and CA_1_28.

The following example is described in detail by using an example in which the UE capability information 50 includes B1, B5, B28, CA_1_5, and CA_1_28, and the UE supports B28A in B28, and supports the carrier aggregation of B1 and B28A.

S504: The base station A sends an RRC connection reconfiguration message 51 to the UE.

Exemplarily, based on the capability information (for example, the UE capability information 50) reported by the UE, the base station A sends the RRC connection reconfiguration message 51 to the UE. The RRC connection reconfiguration message 51 carries a CA configuration A, and the CA configuration A is used for configuring a CA combination for the UE.

In this example, the CA configuration A includes at least one CA combination. For example, the CA configuration A includes the CA combination 2, and the CA combination 2 includes the carrier aggregation of B1 and B28B.

In some embodiments of this application, the RRC connection reconfiguration message 51 may be referred to as a first RRC connection reconfiguration message or may be named another name, and this is not limited.

S505: The UE determines, based on the RRC connection reconfiguration message 51 and a capability supported by the UE, that a protocol check fails.

Exemplarily, the UE may perform, based on the RRC connection reconfiguration message 51 and the capability supported by the UE, a protocol check on the CA combination 2. Specifically, the UE may determine, based on CA configured by the base station and the frequency band and CA combination supported by the UE, whether a CA combination configured by the base station A includes a frequency band supported by the UE, and/or whether the CA combination configured by the base station is included in the CA combination supported by the UE. If the CA combination configured by the base station A includes the frequency band supported by the UE, and/or the CA combination configured by the base station is included in the CA combination supported by the UE, it is determined that the protocol check succeeds. If the CA combination configured by the base station A does not include the frequency band supported by the UE, and/or the CA combination configured by the base station A is not included in the CA combination supported by the UE, it is determined that the protocol check fails.

For example, the CA combination 2 configured by the base station for the UE includes the carrier aggregation of B1 and B28B. The UE actually supports B28A in B28, supports the carrier aggregation of B1 and B28A, and does not support B28B. A frequency band not supported by the UE exists in the CA combination 2 configured by the base station A, the CA combination 2 is a CA combination not supported by the UE, and the UE fails to perform the protocol check on the CA combination 2.

In this embodiment of this application, after the protocol check performed by the UE based on the RRC connection reconfiguration message 51 fails, the UE may be triggered to initiate a tracking area update procedure 1 to the base station A. The tracking area update procedure 1 includes a UE capability query procedure_1. Through the UE capability query procedure_1, the UE may update a CA combination supported by the UE to the base station A.

Specific execution of the tracking area update procedure 1 is described below by using an example in which the UE fails to perform the protocol check on the CA combination 2. In this example, the specific execution of the tracking area update procedure 1 may include S506 to S510.

S506: The UE sends a tracking area update request 52 to the base station A.

In this example, the tracking area update request 52 may be used for triggering the base station A to query a frequency band and a CA combination that are supported by the UE. The tracking area update request 52 includes TrackingAreaUpdateRequest.

Correspondingly, the base station A receives the tracking area update request 52.

In some embodiments of this application, the tracking area update request 52 may also be referred to as a first tracking area update request or a first update request, and is not limited thereto.

S507: The base station A sends a UE capability query message 53 to the UE based on the tracking area update request 52.

Exemplarily, after receiving the tracking area update request 52, the base station A may initiate the UE capability query procedure_1 to the UE, for example, send the UE capability query message 53 to the UE. The UE capability query message 53 is used for querying a frequency band and a CA combination that are supported by the UE.

In this example, for specific execution of S507, refer to S204 shown in FIG. 2. Details are not described herein again.

In some embodiments of this application, the UE capability query message 53 may also be referred to as a first terminal capability query message or a first query message, and is not limited thereto.

S508: The UE sends UE capability information 54 to the base station A, where the UE capability information 54 does not include CA_1_28.

In some embodiments of this application, after receiving the UE capability query message 53, the UE feeds back the UE capability information 54 (for example, UECapabilityInformation) to the base station A. The UE capability information 54 does not include CA_1_28, and may include B1, B5, B28, and CA_1-5.

In some other embodiments of this application, the UE capability information 54 may also be referred to as first terminal capability information or first capability information, and is not limited thereto.

Correspondingly, the base station A receives the UE capability information 54.

S509: The base station A sends a tracking area update accept message 55 to the UE.

In some embodiments of this application, the tracking area update accept message 55 may also be referred to as a first tracking area update accept message.

S510: The UE sends a tracking area update complete message 56 to the base station A.

In some embodiments of this application, the tracking area update complete message 56 may also be referred to as a first tracking area update complete message.

Exemplarily, after receiving the capability information 54 sent by the UE, the base station A sends the tracking area update accept message 55 (for example, TrackingAreaUpdateAccept) to the UE.

Optionally, after receiving the tracking area update complete message 56, the UE feeds back a tracking area update complete message 57 (for example, TrackingAreaUpdateComplete) to the base station A.

It should be noted that, in the tracking area update procedure 1 from S506 to S510, for messages sent by the UE and received by the base station A, such as S506, S508, and S510, the base station A may also directly transparently transmit the messages to MME. Correspondingly, messages returned by the base station A to the UE, such as S507 and S509, are first sent to the base station A by the MME, and then are transparently transmitted to the UE by the base station A.

S511: The base station A sends an RRC connection reconfiguration message 57 to the UE.

Exemplarily, after the tracking area update procedure 1 ends, the base station A sends, based on the UE capability information 54, the RRC connection reconfiguration message 57 to the UE, to initiate the RRC connection reconfiguration procedure to the UE again. The RRC connection reconfiguration message 57 carries a CA configuration B. A CA configuration C is used for configuring a CA combination for the UE, and the CA configuration B includes at least one CA combination.

In this example, the CA configuration B may include CA_1_5. The base station A may send the RRC connection reconfiguration message 57 carrying CA_1_5 to the UE.

In some embodiments of this application, the RRC connection reconfiguration message 57 may also be referred to as a second RRC connection reconfiguration message.

S512: The UE determines, based on the RRC connection reconfiguration message 57 and a capability supported by the UE, that a protocol check succeeds.

Exemplarily, a protocol executed by the UE may include performing a protocol check on the CA configuration B carried in the RRC connection reconfiguration message 57.

For example, the UE may perform a protocol check on CA_1_5. In this example, CA_1_5 is a CA combination supported by the UE. Correspondingly, the UE successfully performs the protocol check on CA_1_5.

Therefore, when another protocol check also succeeds, the UE may perform S513.

S513: The UE sends an RRC connection reconfiguration complete message 58 to the base station A.

In this example, the UE may send, to the base station A, the RRC connection reconfiguration complete message 58 indicating that the RRC connection reconfiguration succeeds. For specific execution of S513, refer to S303 shown in FIG. 3. Details are not described herein again.

In the example in FIG. 5, after the protocol check performed on the CA configuration A fails, the UE reports the UE capability information 54 to the base station A by initiating the tracking area update procedure 1. The UE capability information 54 does not include CA_1_28. Based on the UE capability information 54, the base station A may configure CA_1_5 for the UE, and CA_1_5 is a CA combination supported by the UE. In this way, the base station A may initiate the RRC connection reconfiguration procedure to the UE again, so that the UE successfully performs the protocol check on CA_1_5. The RRC connection reestablishment is avoided, so that the UE can maintain normal communication.

The foregoing embodiment is described by using an example in which the UE successfully performs the protocol check based on the RRC connection reconfiguration message 57. In some other embodiments of this application, the UE fails to perform a protocol check based on the RRC connection reconfiguration message 57. Correspondingly, the embodiments of this application further provide another communication method. After the protocol check performed based on the RRC connection reconfiguration message 57 fails, the UE may be triggered to initiate a tracking area update procedure 2. Through the tracking area update procedure 2, the UE may report information about the operating frequency band and the CA combination that are supported by the UE to the base station A again. In this way, the UE avoids triggering of an RRC connection reestablishment after a subsequent RRC connection reconfiguration procedure ends.

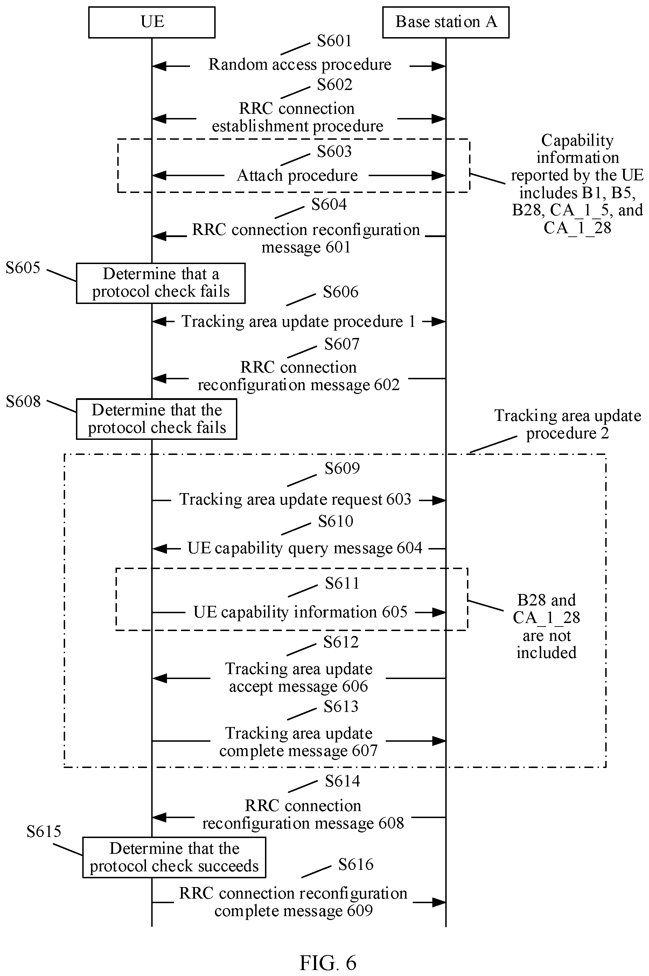

Exemplarily, refer to FIG. 6. A solution provided in the embodiments of this application is described by using an example.

As shown in FIG. 6, the solution may include the following steps:
S601: The UE initiates a random access procedure to the base station A.
S602: The UE initiates an RRC connection establishment procedure to the base station A.
S603: The UE initiates an attach procedure to the base station A.
   In the embodiments of this application, the UE reports UE capability information 60 to the base station A in the attach procedure of S603. The following example is described in detail by using an example in which the UE capability information 60 includes B1, B5, B28, CA_1_5, and CA_1_28, and the UE supports B28A in B28, and supports the carrier aggregation of B1 and B28A.
S604: The base station A sends an RRC connection reconfiguration message 601 to the UE.
S605: The UE determines, based on the RRC connection reconfiguration message 601 and a capability supported by the UE, that a protocol check fails.
S606: The UE initiates a tracking area update procedure 1 to the base station A.
   In the embodiments of this application, S601 to S605 respectively correspond to S501 to S505 shown in FIG. 5. For specific execution, refer to the descriptions in S501 to S505. For specific execution of the tracking area update procedure 1, refer to S506 to S510 shown in FIG. 5. Details are not described herein again.
S607: The base station A sends an RRC connection reconfiguration message 602 to the UE.

In some embodiments of this application, the base station A may still configure the CA combination 2 for the UE, and send the CA combination 2 carried in the RRC connection reconfiguration message 602 to the UE. With reference to the foregoing descriptions, the CA combination 2 includes the carrier aggregation of B1 and B28B. Because the UE does not support B28B, the CA combination 2 is a CA combination not supported by the UE.

In some other embodiments of this application, the RRC connection reconfiguration message 602 may also be referred to as a fourth RRC connection reconfiguration message.

S608: The UE determines, based on the RRC connection reconfiguration message 602 and the capability supported by the UE, that a protocol check fails.

In this example, the UE fails to perform the protocol check on the CA combination 2 based on the RRC connection reconfiguration message 602. For specific execution of performing the protocol check on the CA combination 2 by the UE, refer to the descriptions in S505. Details are not described herein again.

In some embodiments of this application, after the protocol check performed by the UE based on the RRC connection reconfiguration message 602 fails, the UE may be triggered to initiate a tracking area update procedure 2 to the base station A. The tracking area update procedure 2 includes a UE capability query procedure_2. The UE may update, to the base station A through the UE capability query procedure_2, information about the operating frequency band and the CA combination that are supported by the UE.

Specific execution of the tracking area update procedure 2 is described below by using an example in which the UE fails to perform the protocol check on the CA combination 2. In this example, the specific execution of the tracking area update procedure 2 may include S609 to S613.

S609: The UE sends a tracking area update request 603 to the base station A.

Exemplarily, the UE may initiate a tracking area update procedure 2 to the base station A through the tracking area update request 603.

Correspondingly, the base station A receives the tracking area update request 603.

In this example, for specific execution of S609, refer to the descriptions in S506 in FIG. 5.

In this embodiment of this application, the tracking area update request 603 is further used for triggering the UE capability query procedure_2. For specific execution of the UE capability query procedure_2, refer to descriptions in the following S610 and S611.

In some other embodiments of this application, the tracking area update request 603 may also be referred to as a third tracking area update request.

S610: The base station A sends a UE capability query message 604 to the UE based on the tracking area update request 603.

Exemplarily, after receiving the tracking area update request 603, the base station A may initiate the UE capability query procedure_2 to the UE by sending the UE capability query message 604. The UE capability query message 75 is used for querying a frequency band and a CA combination that are supported by the UE.

In this example, for specific execution of S610, refer to the descriptions in S507 in FIG. 5.

In some other embodiments of this application, the UE capability query message 604 may also be referred to as a third terminal capability query message.

S611: The UE sends UE capability information 605 to the base station A, where the UE capability information 605 does not include B28 or CA_1_28.

In some embodiments of this application, after receiving the UE capability query message 604, the UE feeds back the UE capability information 605 (for example, UECapabilityInformation) to the base station A. The UE capability information 605 does not include B28 or CA_1_28, and includes B1, B5, and CA_1_5. That is, the UE updates an operating frequency band and CA combination supported by the UE to the base station A through the tracking area update procedure 2.

Correspondingly, the base station A receives the UE capability information 605.

In some other embodiments of this application, the UE capability information 605 may also be referred to as a third terminal capability information.

S612: The base station A sends a tracking area update accept message 606 to the UE.

S613: The UE sends a tracking area update complete message 607 to the base station A.

In an example, S612 and S613 respectively correspond to S509 and S510 in FIG. 5. For specific execution, refer to the descriptions in S509 and S510. Details are not described herein again.

S614: The base station A sends an RRC connection reconfiguration message 608 to the UE.

Exemplarily, after the tracking area update procedure 2 ends, the base station A sends, based on the UE capability information 605, the RRC connection reconfiguration message 608 to the UE, to initiate the RRC connection reconfiguration procedure to the UE again. The RRC connection reconfiguration message 608 carries a CA configuration C. The CA configuration C is used for configuring a CA combination for the UE. The CA configuration C includes at least one CA combination.

For example, the CA configuration C includes CA_1_5.

In some other embodiments of this application, the RRC connection reconfiguration message 608 may also be referred to as a fifth RRC connection reconfiguration message.

S615: The UE determines, based on the RRC connection reconfiguration message 608 and the capability supported by the UE, that the protocol check succeeds.

Exemplarily, after receiving the RRC connection reconfiguration message 608, the UE performs a protocol check on CA_1_5.

In this example, CA_1_5 is a CA combination supported by the UE. Correspondingly, the UE successfully performs the protocol check on CA_1_5 based on the RRC connection reconfiguration message 608.

Therefore, when another protocol check also succeeds, the UE may perform an operation in S616.

S616: The UE sends an RRC connection reconfiguration complete message 609 to the base station A.

In this example, the UE may send, to the base station A in S616, the RRC connection reconfiguration complete message 609 indicating that the RRC connection reconfiguration succeeds. For specific execution of S616, refer to S303 shown in FIG. 3. Details are not described herein again.

In the example in FIG. 6, after the protocol check performed on the CA combination 2 based on the RRC connection reconfiguration message 602 fails, the UE updates the operating frequency band and the CA combination that are supported by the UE to the base station A by initiating the tracking area update procedure 2, and sends the operating frequency band and the CA combination that are supported by the UE and carried in the UE capability information 605 to the base station A. The UE capability information 605 does not include B28 or CA_1_28. Based on the UE capability information 605, the base station A may configure CA_1_5 for the UE, and CA_1_5 is a CA combination supported by the UE. In this way, the base station A may initiate the RRC connection reconfiguration procedure to the UE again, so that the UE successfully performs the protocol check on CA_1_5. The RRC connection reestablishment is avoided, so that normal communication can be maintained in the UE.

The foregoing embodiment is described by using an example in which the UE successfully performs the protocol check based on the RRC connection reconfiguration message 608. In some other embodiments of this application, the UE fails to perform the protocol check based on the RRC connection reconfiguration message 608. Correspondingly, the embodiments of this application further provide another communication method. After the protocol check performed based on the RRC connection reconfiguration message 608 fails, the UE may be triggered to initiate a tracking area update procedure 3. Through the tracking area update procedure 3, the UE may report the UE capability information to the base station A again. The UE capability information does not include a CA combination.

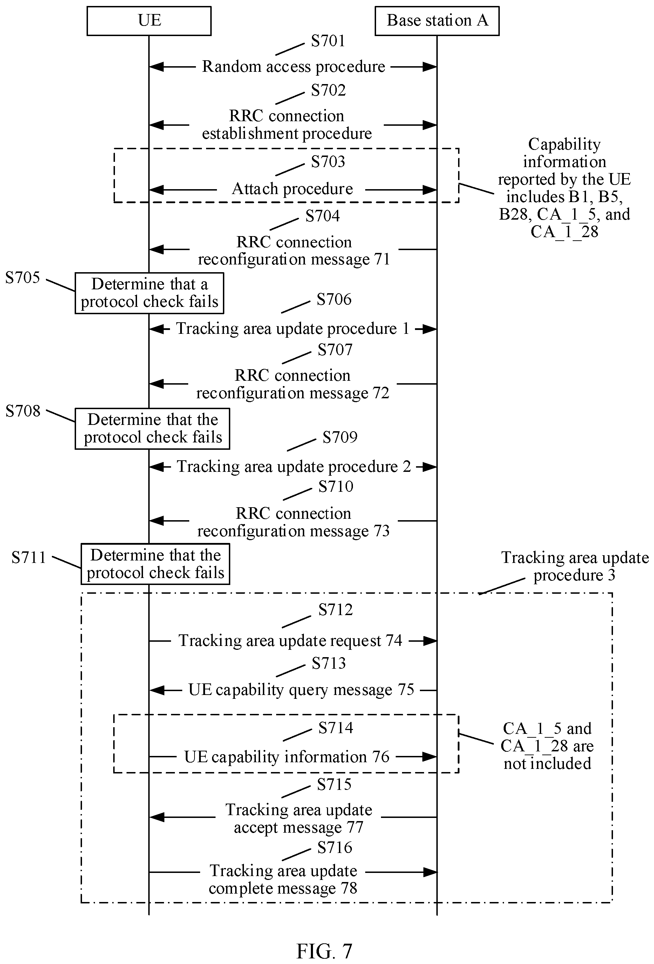

As shown in FIG. 7, the solution may include the following steps:
S701: The UE initiates a random access procedure to the base station A.
S702: The UE initiates an RRC connection establishment procedure to the base station A.
S703: The UE initiates an attach procedure to the base station A.
   In the embodiments of this application, the UE reports UE capability information 70 to the base station A in the attach procedure of S703. The following example is described in detail by using an example in which the UE capability information 70 includes B1, B5, B28, CA_1_5, and CA_1_28, and the UE supports B28A in B28, and supports the carrier aggregation of B1 and B28A.
S704: The base station A sends an RRC connection reconfiguration message 71 to the UE.
S705: The UE determines, based on the RRC connection reconfiguration message 71 and a capability supported by the UE, that a protocol check fails.
S706: The UE initiates a tracking area update procedure 1 to the base station A.
S707: The base station A sends an RRC connection reconfiguration message 72 to the UE.
S708: The UE determines, based on the RRC connection reconfiguration message 72 and the capability supported by the UE, that the protocol check fails.
S709: The UE initiates a tracking area update procedure 2 to the base station A.
   In this embodiment of this application, S701 to S708 respectively correspond to S601 to S608 shown in FIG. 6. For specific execution, refer to the descriptions in S601 to S608. For specific execution of the tracking area update procedure 2 in S709, refer to S609 to S613 shown in FIG. 6. Details are not described herein again.
S710: The base station A sends an RRC connection reconfiguration message 73 to the UE.

In some embodiments of this application, the base station A configures the CA combination 2 for the UE again, and sends the CA combination 2 carried in the RRC connection reconfiguration message 73 to the UE. In this embodiment, the CA combination 2 includes the carrier aggregation of B1 and B28B. Because the UE does not support B28B, the CA combination 2 is a CA combination not supported by the UE.

In some other embodiments of this application, the RRC connection reconfiguration message 73 may also be referred to as a sixth RRC connection reconfiguration message.

S711: The UE determines, based on the RRC connection reconfiguration message 73 and the capability supported by the UE, that the protocol check fails.

In this example, the UE fails to perform the protocol check on the CA combination 2 based on the RRC connection reconfiguration message 73, that is, the UE fails to configure the CA combination 2. For specific execution of performing the protocol check on the CA combination 2 by the UE, refer to the descriptions in S505. Details are not described herein again.

In this embodiment of this application, after the protocol check performed by the UE based on the RRC connection reconfiguration message 73 fails, the UE may be triggered to initiate a tracking area update procedure 3 to the base station A. The tracking area update procedure 3 includes a UE capability query procedure_3. The UE may report the UE capability information that does not include a CA combination to the base station A through the UE capability query procedure_3.

In this application, specific execution of the tracking area update procedure 3 may include S712 to S716.

S712: The UE sends a tracking area update request 74 to the base station A.

Exemplarily, the UE may initiate a tracking area update procedure 3 to the base station A through the tracking area update request 74. In this example, for specific execution of S712, refer to the descriptions in S506 in FIG. 5.

Correspondingly, the base station A receives the tracking area update request 74.

In this embodiment of this application, the tracking area update request 74 is further used for triggering the UE capability query procedure_3. For specific execution of the UE capability query procedure_3, refer to descriptions in the following S713 and S714.

In some other embodiments of this application, the tracking area update request 74 may also be referred to as a fourth tracking area update request.

S713: The base station A sends a UE capability query message 75 to the UE based on the tracking area update request 74.

Exemplarily, after receiving the tracking area update request 74, the base station A may initiate the UE capability query procedure_3 to the UE by sending the UE capability query message 75. The UE capability query message 75 is used for querying a frequency band and a CA combination that are supported by the UE.

In this example, for specific execution of S713, refer to the descriptions in S507 in FIG. 5.

In some other embodiments of this application, the UE capability query message 75 may also be referred to as a fourth capability query message.

S714: The UE sends UE capability information 76 to the base station A, where the UE capability information 76 does not include CA_1_5 or CA_1_28.

In some embodiments of this application, after receiving the UE capability query message 75, the UE feeds back the UE capability information 76 (for example, UECapabilityInformation) to the base station A. The UE capability information 76 does not include a CA combination, and only includes an operating frequency band. That is, the UE capability information does not include CA_1_5 or CA_1_28, and includes B1, B5, and B28.

In some other embodiments of this application, the UE capability information 76 may also be referred to as fourth capability information.

Correspondingly, the base station A receives the UE capability information 76.

S715: The base station A sends a tracking area update accept message 77 to the UE.

S716: The UE sends a tracking area update complete message 78 to the base station A.

In an example, S715 and S716 respectively correspond to S509 and S510 in FIG. 5. For specific execution, refer to the descriptions in S509 and S510. Details are not described herein again.

In some other embodiments of this application, after the protocol check performed by the UE based on the RRC connection reconfiguration message 71 fails in S704, the UE may initiate the tracking area update procedure 3, and perform the operations in S712 to S716.

In some other embodiments of this application, after the protocol check performed by the UE based on the RRC connection reconfiguration message 72 fails in S707, the UE may initiate the tracking area update procedure 3, and perform the operations in S712 to S716.

In the example in FIG. 7, after the protocol check performed on the CA combination 2 based on the RRC connection reconfiguration message 73 fails, the UE reports the UE capability information 76 to the base station A by initiating the tracking area update procedure 3. The UE capability information 76 does not include a CA combination. In this way, based on the UE capability information 76, a base station side does not configure a CA combination for the UE. Further, in a subsequent RRC connection reconfiguration procedure, the UE is prevented from entering the RRC connection reestablishment because the protocol check performed on the CA configuration fails, so that normal communication can be maintained in the UE.

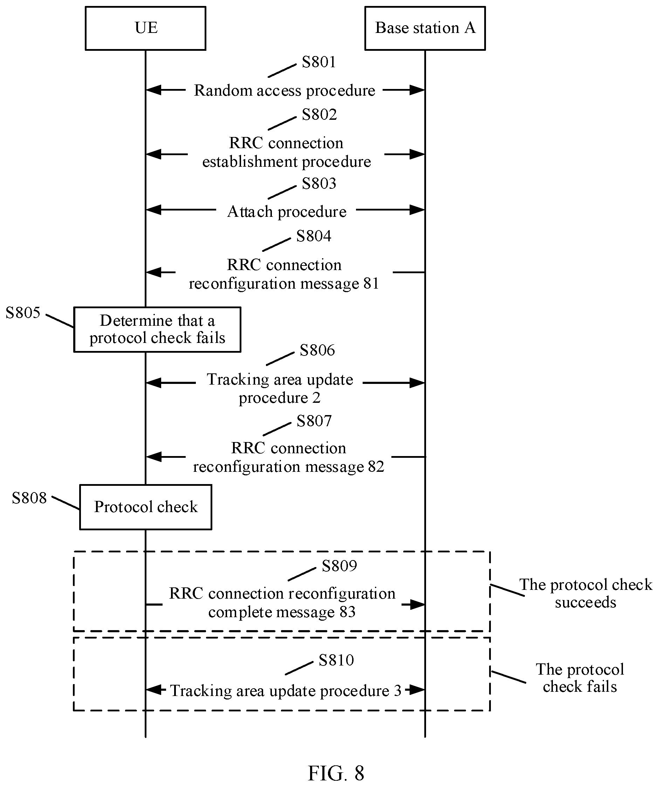

In some other embodiments of this application, based on the scenario shown in FIG. 1, the embodiments of this application further provide still another communication method. Exemplarily, refer to FIG. 8. A solution provided in this embodiment of this application is described by using an example.

As shown in FIG. 8, the solution may include the following steps:
S801: The UE initiates a random access procedure to the base station A.
S802: The UE initiates an RRC connection establishment procedure to the base station A.
S803: The UE initiates an attach procedure to the base station A.
   In this embodiment of this application, the UE reports UE capability information 80 to the base station A in the attach procedure of S803. The following example is described in detail by using an example in which the UE capability information 80 includes B1, B5, B28, CA_1_5, CA_1_28, and the UE supports B28A in B28, and supports the carrier aggregation of B1 and B28A.
S804: The base station A sends an RRC connection reconfiguration message 81 to the UE.
S805: The UE determines, based on the RRC connection reconfiguration message 81 and a capability supported by the UE, that a protocol check fails.

In this example, S801 to S805 correspond to S501 to S505 in FIG. 5. For specific execution, refer to the descriptions in S501 and S505. Details are not described herein again.

In this embodiment of this application, after the protocol check performed by the UE based on the RRC connection reconfiguration message 81 fails, the UE may be triggered to initiate a tracking area update procedure 2 to the base station A. In the tracking area update procedure 2, the UE may update information about an operating frequency band and a CA combination that are supported by the UE to the base station A.

S806: The UE initiates the tracking area update procedure 2 to the base station A.

In this example, in the tracking area update procedure 2, the UE reports UE capability information to the base station A. The UE capability information may correspondingly be the UE capability information 605 not including B28 or CA_1_28. For specific execution of S806, refer to S609 to S613 shown in FIG. 6. Details are not described herein again.

S807: The base station A sends an RRC connection reconfiguration message 82 to the UE.

Exemplarily, after the tracking area update procedure 2 ends, the base station A sends the RRC connection reconfiguration message 82 to the UE, to initiate an RRC connection reconfiguration procedure to the UE again. The RRC connection reconfiguration message 82 carries a CA configuration D. The CA configuration D is used for configuring a CA combination for the UE. The CA configuration D includes at least one CA combination.

In some other embodiments of this application, the RRC connection reconfiguration message 82 may also be referred to as a third RRC connection reconfiguration message.

S808: The UE performs a protocol check based on the RRC connection reconfiguration message 82 and the capability supported by the UE.

Exemplarily, after receiving the RRC connection reconfiguration message 82, the UE performs a protocol check on the CA configuration D. In an example, for specific execution of performing the protocol check on the CA configuration D by the UE, refer to the descriptions in S505.

In an implementation, the CA configuration D includes CA_1_5, and CA_1_5 is a CA combination supported by the UE. In this implementation, the UE successfully performs a protocol check on CA_1_5 based on the RRC connection reconfiguration message 82.

Therefore, when another protocol check also succeeds, the UE may perform an operation in S809.

In another implementation, the CA configuration D includes the CA combination 2, and the CA combination 2 includes the carrier aggregation of B1 and B28B. In this implementation, B28B is a frequency band not supported by the UE, and the CA combination 2 is a CA combination not supported by the UE. The UE fails to perform a protocol check on the CA combination 2 based on the RRC connection reconfiguration message 82.

In some embodiments of this application, after the protocol check performed by the UE based on the RRC connection reconfiguration message 82 fails, the UE may be triggered to initiate a tracking area update procedure 3 to the base station A. In the tracking area update procedure 3, the UE may update the UE capability information to the base station A. Updated capability information does not include information about a CA combination.

S809: The UE sends an RRC connection reconfiguration complete message 83 to the base station A.

Exemplarily, after the protocol check is successfully performed on the CA configuration D, the UE can send the RRC connection reconfiguration complete message 83 indicating that the RRC connection reconfiguration succeeds to the base station A in S809. For specific execution of S809, refer to S303 shown in FIG. 3. Details are not described herein again.

S810: The UE initiates the tracking area update procedure 3 to the base station A.

Exemplarily, in the tracking area update procedure 3, the UE sends a tracking area update request 84 to the base station A, to trigger the base station A to query a frequency band and a CA combination that are supported by the UE. The base station A may send a UE capability query message 85 to the UE, to query the frequency band and the CA combination that are supported by the UE. The UE reports UE capability information 86 to the base station A in response to the UE capability query message 85. The UE capability information 86 does not include CA_1_5 or CA_1_28.

In some other embodiments of this application, the tracking area update request 84 may also be referred to as a second tracking area update request, the UE capability query message 85 may also be referred to as a second terminal capability query message, and the UE capability information 86 may also be referred to as second terminal capability information.

In the solutions shown in FIG. 5 to FIG. 8, after the protocol check performed by the UE on the CA configuration fails, the tracking area update procedure may be triggered. In the tracking area update procedure, the UE may update the UE capability information to the base station A. Based on the updated UE capability information, it can be avoided that in a subsequent RRC connection reconfiguration procedure, the UE enters an RRC connection reestablishment procedure because the protocol check performed on the CA configuration fails. Therefore, normal communication can be maintained on the UE side.

It should be noted that the examples shown in FIG. 5 to FIG. 8 are all described by using an example in which the UE supports some frequency points in B28. In some other embodiments, the UE may further support some frequency points in B41, such as B41A, and support a CA combination related to B41A.

In some other embodiments of this application, based on the scenario shown in FIG. 1, the embodiments of this application further provide another communication method. Based on the solution, the UE may ignore a CA configuration on which a protocol check fails, and send an RRC connection reconfiguration complete message to the base station when another protocol check also succeeds. Further, triggering of the RRC connection reestablishment procedure due to a protocol check failure is avoided.

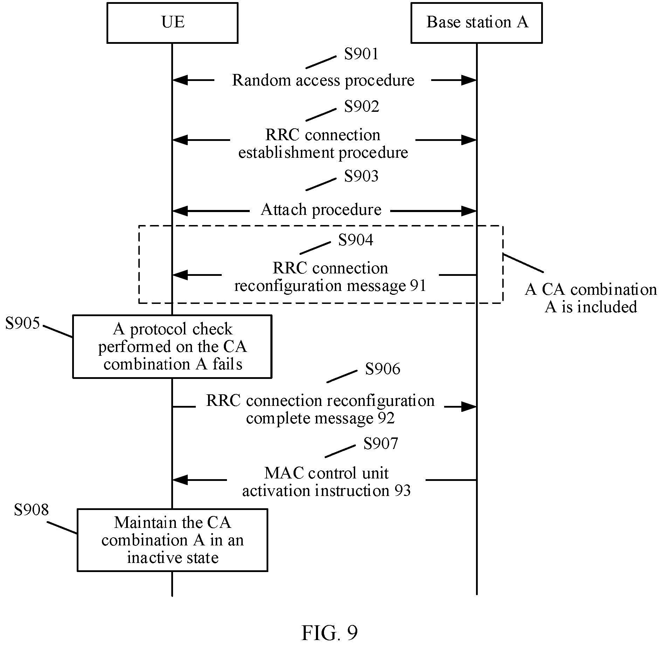

Exemplarily, refer to FIG. 9. A solution provided in this embodiment of this application is described by using an example.

As shown in FIG. 9, the solution may include the following steps:
S901: The UE initiates a random access procedure to the base station A.
S902: The UE initiates an RRC connection establishment procedure to the base station A.
S903: The UE initiates an attach procedure to the base station A.

In this example, S901 to S903 correspond to S501 to S503 in FIG. 5. For specific execution, refer to the descriptions in S501 and S503. Details are not described herein again.

In the embodiments of this application, the UE reports UE capability information 90 to the base station A in the attach procedure of S903. The following example is described in detail by using an example in which the UE capability information 90 includes B1, B5, B28, CA_1_5, and CA_1_28, and the UE actually supports B28A in B28, and supports the carrier aggregation of B1 and B28A.

S904: The base station A sends an RRC connection reconfiguration message 91 to the UE.

Exemplarily, the RRC connection reconfiguration message 91 carries a CA configuration E, the CA configuration E is used for configuring a CA combination for the UE, and the CA configuration E includes at least one CA combination.

In this example, the CA configuration E includes a CA combination A, and the base station A may send the RRC connection reconfiguration message 91 carrying the CA combination A to the UE.

In some embodiments of this application, the CA combination A may also be referred to as a fifth CA combination.

An example in which the CA configuration E includes the CA combination A is used in the following example, to describe the method in this embodiment of this application.

S905: The UE fails to perform a protocol check on the CA combination A based on the RRC connection reconfiguration message 91 and a capability supported by the UE.

In this example, the CA combination A may correspond to carrier aggregation of the frequency band 1 and the frequency band 2.

In some other embodiments of this application, the frequency band 1 may also be referred to as a fifth frequency band, and the frequency band 2 may also be referred to as a sixth frequency band.

In some implementations, the UE supports the frequency band 1 and the frequency band 2, but the UE does not support the carrier aggregation of the frequency band 1 and the frequency band 2. For example, if the frequency band 1 is B1, and the frequency band 2 is B5, the CA combination A includes the carrier aggregation of B1 and B5.

In some other implementations, the UE does not support the frequency band 1 or the frequency band 2.

For example, an example in which the UE does not support the frequency band 2 is used, the frequency band 1 is B1, the frequency band 2 is B28B, and the CA combination A includes the carrier aggregation of B1 and B28B.

In the foregoing two implementations, the UE does not support the CA combination A. Correspondingly, the UE fails to perform, based on the RRC connection reconfiguration message 91, the protocol check on the CA combination A carried in the RRC connection reconfiguration information 91. For specific execution of performing the protocol check on the CA combination A by the UE, refer to the descriptions in S505.

In some embodiments of this application, the UE may set a check identifier A to indicate whether the protocol check performed on the CA combination A succeeds. The check identifier A includes a first value or a second value. When the check identifier A is the first value, it corresponds to that the protocol check performed on the CA combination A succeeds. When the check identifier A is the second value, it corresponds to that the protocol check performed on the CA combination A fails.

For example, after the protocol check performed on the CA combination A fails, the UE may set the check identifier A as the second value, to indicate that the protocol check performed on the CA combination A fails.

In this embodiment, the UE may further be pre-configured with an ignorable item, and the ignorable item includes a check item A. The check item A is a protocol check item performed on the CA combination A. In this example, in a process in which the UE performs the protocol check, the protocol check performed on the CA combination A fails. The UE may ignore the failure item based on a fact that the protocol check item corresponding to the CA combination A (namely, the check item A) is included in the ignorable item.

It should be noted that in this application, the RRC connection reconfiguration message 91 may further carry other configuration information. The UE may perform a protocol check on the other configuration information. When the protocol check performed on the other configuration information succeeds, the UE may perform an operation in S906.

S906: The UE sends an RRC connection reconfiguration complete message 92 to the base station A.

In this example, when the UE fails to perform the protocol check on the CA combination A and successfully performs the protocol check on the other configuration information, the UE may send the RRC connection reconfiguration complete message 92 to the base station A, to indicate that a current RRC connection reconfiguration procedure of the UE successfully ends.

In some other embodiments of this application, the RRC connection reconfiguration complete message 92 may also be referred to as a first RRC connection reconfiguration complete message.

It should be noted that, after the RRC connection reconfiguration procedure successfully ends, according to a protocol, the base station A sends a media access control (Media Access Control, MAC) control unit activation instruction at a MAC layer, to control the UE to activate the CA combination A.

In some embodiments of this application, after the RRC connection reconfiguration procedure successfully ends, the following operations may further be performed between the UE and the base station A, to complete a procedure of activating the CA combination A.

S907: The base station A sends the MAC control unit activation instruction 93 to the UE.

It should be noted that, in this embodiment, the CA combination A sent to the UE is correspondingly configured with an identifier A. The identifier A is used for identifying the CA combination A.

Exemplarily, the MAC control unit activation instruction 93 carries a field A1, and the field Al corresponds to the identifier A. The field A1 includes a third value or a fourth value. The third value corresponds to activating the CA combination A, and the fourth value corresponds to not activating the CA combination A. In this example, the field A1 is the third value, and the MAC control unit activation instruction 93 is used for instructing to activate the CA combination A corresponding to the identifier A.

In some other embodiments of this application, the MAC control unit activation instruction 93 may also be referred to as a first activation instruction.

It should be noted that in this example, the base station A may send the MAC control unit activation instruction 93 to the UE through an MAC control unit. The MAC control unit may implement signaling interaction between a MAC layer of the base station and a MAC layer of the UE. The MAC layer is a media access control layer. In some implementations, the MAC control unit may alternatively be a MAC Control Element.

S908: The UE maintains the CA combination A in an inactive state based on the MAC control unit activation instruction 93.

It should be noted that, in the UE, the CA combination A is correspondingly configured with a field A2, and the field A2 corresponds to the field A1. Before the MAC control unit activation instruction 93 is received, the field A2 is configured as the fourth value, corresponding to that the CA combination A is in the inactive state.

Exemplarily, after receiving the MAC control unit activation instruction 93 at the MAC layer, the UE may maintain the CA combination A in the inactive state.

For example, when the check identifier A corresponds to the second value, the UE maintains the field A2 of the CA combination A as the fourth value based on the field A1 carried in the MAC control unit activation instruction 93. Therefore, the UE does not activate the CA combination A on which the check fails. With reference to the foregoing descriptions, when the check identifier A is the second value, the protocol check corresponding to the CA combination A fails.

According to the example in FIG. 9, the UE may be enabled to ignore a check failure item of the CA combination A, and send the RRC connection reconfiguration complete message to the base station A when the check performed on the other configuration information succeeds, to successfully end the RRC connection reconfiguration procedure. After receiving the instruction for instructing to activate the CA combination A, the UE maintains the CA combination A in the inactive state, so that the procedure of activating the CA combination A initiated by the base station side ends normally.

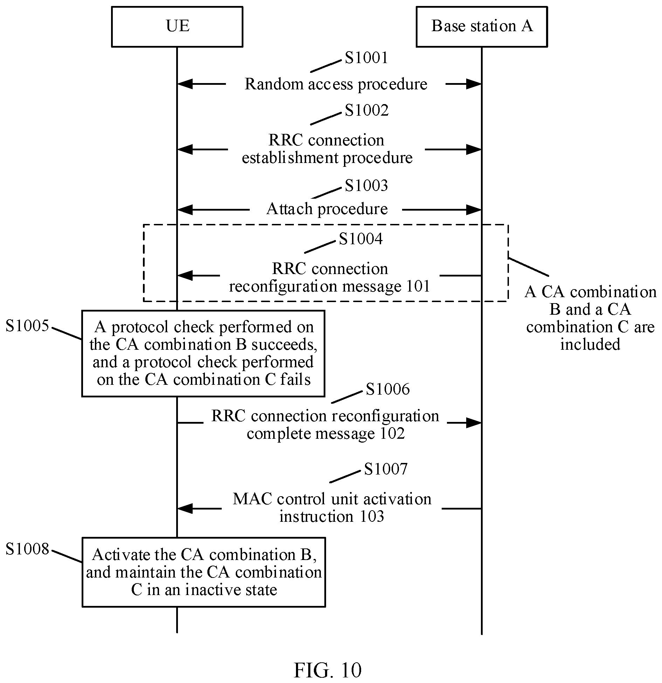

The foregoing example is described by using an example in which the CA configuration E includes only the CA combination A. In some other embodiments of this application, the CA configuration E includes the CA combination B and the CA combination C. FIG. 10 is a schematic diagram of interaction of yet another communication method according to an embodiment of this application.

Exemplarily, refer to FIG. 10. A solution provided in the embodiments of this application is described by using an example.

As shown in FIG. 10, the solution may include the following steps:
S1001: The UE initiates a random access procedure to the base station A.
S1002: The UE initiates an RRC connection establishment procedure to the base station A.
S1003: The UE initiates an attach procedure to the base station A.
   In this example, S1001 to S1003 correspond to S501 to S503 in FIG. 5. For specific execution, refer to the descriptions in S501 and S503. This is not described herein again.
S1004: The base station A sends an RRC connection reconfiguration message 101 to the UE.
   In this example, the RRC connection reconfiguration message 101 carries the CA configuration E, and the CA configuration E includes the CA combination B and the CA combination C. The base station A may send the RRC connection reconfiguration message 101 carrying the CA combination B and the CA combination C to the UE.
S1005: The UE successfully performs a protocol check on the CA combination B and fails to perform a protocol check on the CA combination C based on the RRC connection reconfiguration message 101 and a capability supported by the UE.

In this example, the CA combination B is a CA combination supported by the UE, and the CA combination C is a CA combination not supported by the UE. Correspondingly, the UE successfully performs the protocol check on the CA combination B, and fails to perform the protocol check on the CA combination C.

In some embodiments of this application, the UE may set a check identifier B to indicate whether the protocol check performed on the CA combination B succeeds. Similarly, the UE may set a check identifier C to indicate whether the protocol check performed on the CA combination C succeeds. The check identifier B and the check identifier C include the first value or the second value. The first value corresponds to that the protocol check succeeds, and the second value corresponds to that the protocol check fails.

For example, after the protocol check performed on the CA combination B succeeds, the UE may set the check identifier B as the first value. After the protocol check performed on the CA combination C fails, the UE may set the check identifier C as the second value.

It should be noted that in this application, the RRC connection reconfiguration message 101 may further carry other configuration information. The UE may perform a protocol check on the other configuration information. When the protocol check performed on the other configuration information succeeds, the UE may perform an operation in S1006.

S1006: The UE sends an RRC connection reconfiguration complete message 102 to the base station A.

In this example, the UE may send the RRC connection reconfiguration complete message 102 to the base station A, to indicate that a current RRC connection reconfiguration procedure of the UE ends successfully.

It should be noted that after the RRC connection reconfiguration procedure successfully ends, according to a protocol, the base station A initiates a procedure of activating the CA combination B and the CA combination C to the UE.

In some embodiments of this application, after the RRC connection reconfiguration procedure successfully ends, the following operations may further be performed between the UE and the base station A, to complete the procedure of activating the CA combination B and the CA combination C.

S1007: The base station A sends an MAC control unit activation instruction 103 to the UE.

It should be noted that, in this embodiment, the CA combination B sent to the UE is correspondingly configured with an identifier B, and the CA combination C sent to the UE is correspondingly configured with an identifier C. The identifier B is used for identifying the CA combination B, and the identifier C is used for identifying the CA combination C.

Exemplarily, the MAC control unit activation instruction 103 carries a field B1 and a field C1. The field B1 corresponds to the identifier B, and the field C1 corresponds to the identifier C. The field B1 and the field C1 include a fifth value or a sixth value. The field B1 is that the fifth value corresponds to activating the CA combination B, and the field B1 is that the sixth value corresponds to inactivating the CA combination B. Similarly, the field C1 is that the fifth value corresponds to activating the CA combination C, and the field C1 is that the sixth value corresponds to inactivating the CA combination C.

In this example, the field B1 and the field C1 are both the fifth value, and the MAC control unit activation instruction 103 is used for instructing to activate the CA combination B corresponding to the identifier B and the CA combination C corresponding to the identifier C.

It should be noted that in this example, the base station A may send the MAC control unit activation instruction 103 to the UE through an MAC control unit.

S1008: The UE activates the CA combination B based on the MAC control unit activation instruction 103, and maintains the CA combination C in an inactive state.

It should be noted that, in the UE, the CA combination B is correspondingly configured with a field B2, and the CA combination C is correspondingly configured with a field C2. The field B2 corresponds to the field B1, and the field C2 corresponds to the field C1. Before the MAC control unit activation instruction 103 is received, the field B2 and the field C2 are configured as the sixth value, corresponding to that the CA combination B and the CA combination C are both in the inactive state.

Exemplarily, the UE may receive the MAC control unit activation instruction 103 at a MAC layer. After receiving the MAC control unit activation instruction 103, the UE activates the CA combination B based on a fact that the check identifier B is the first value. The CA combination C is kept in the inactive state based on a fact that the check identifier C is the second value.

For example, the UE configures the field B2 as the fifth value, and maintains the field C2 as the sixth value. Therefore, the UE activates the CA combination B on which the check is successfully performed, and does not activate the CA combination C on which the check fails to be performed.

According to the example in FIG. 10, the UE may be enabled to ignore the CA combination C on which the check fails to be performed, and send the RRC connection reconfiguration complete message to the base station A when the check performed on the other configuration information succeeds, to successfully end the RRC connection reconfiguration procedure. After receiving the instruction for instructing to activate the CA combination B and the CA combination C, the UE activates the CA combination B on which the check is successfully performed, and maintains the CA combination C on which the check fails to be performed in the inactive state, so that the procedure of activating the CA combination B and the CA combination C initiated by the base station side ends normally.

It should be noted that in the foregoing descriptions, an example in which the UE is used as a device used by a user is used.

In some other embodiments of this application, the UE may alternatively be replaced with any other electronic device having a communication function. The electronic device may also be referred to as a terminal device or terminal.

Exemplarily, the electronic device in this embodiment of this application may include at least one of a mobile phone, a foldable electronic device, a tablet computer, a desktop computer, a laptop computer, a handheld computer, a notebook computer, an ultra-mobile personal computer (ultra-mobile personal computer, UMPC), a netbook, a cellular phone, a personal digital assistant (personal digital assistant, PDA), an augmented reality (augmented reality, AR) device, a virtual reality (virtual reality, VR) device, an artificial intelligence (artificial intelligence, AI) device, a wearable device, an in-vehicle device, a smart home device, or a smart city device. A specific type of the electronic device is not specially limited in this embodiment of this application.

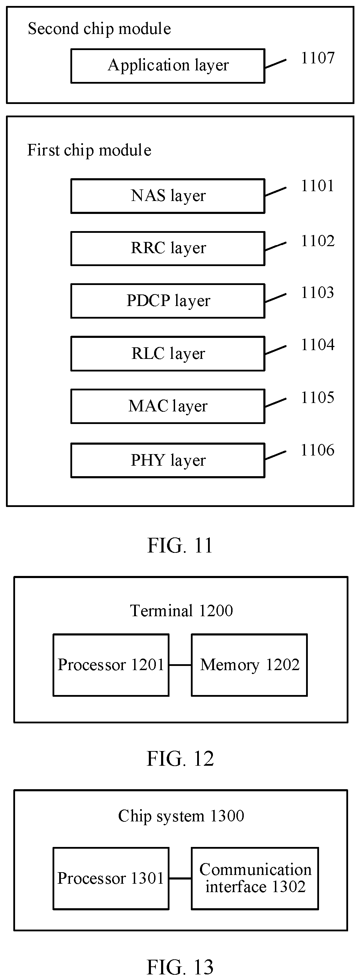

As an example, FIG. 11 is a schematic diagram of composition of an electronic device according to an embodiment of this application.

As shown in FIG. 11, the electronic device may include a multi-layer structure. In this example, the electronic device may include a NAS layer 1101, an RRC layer 1102, a PDCP layer 1103, an RLC layer 1104, a MAC layer 1105, and a PHY layer 1106.

NAS is an abbreviation of a Non Access Stratum, and the NAS layer 1101 is a non-access layer. The NAS layer 1101 is mainly responsible for providing control and management for a non-access layer part, for example, EPS bearer management, authentication, and mobility management in an idle state (that is, an ECM-IDLE state) of an EPS connection management mode, which is responsible for functions such as generating a paging message of the UE in the ECM-IDLE state, and security control.

The RRC layer 1102 is a high layer of a control plane, is mainly responsible for controlling L1/L2 to complete air interface resource transmission, and provides an information transmission service for the NAS layer 1101. Exemplarily, the RRC layer 1102 may be configured to manage functions such as system message broadcast, RRC connection control, mobility management, and measurement configuration reporting. The RRC connection control management includes paging, establishing/modifying/suspending/recovering/releasing an RRC connection, initial security activation, establishing/modifying/activating an SRB/DRB, cell management in a DC and CA mode, radio link failure recovery, and the like.

PDCP is an abbreviation of a Packet Data Convergence Protocol, and the PDCP layer 1103 is a packet data convergence protocol layer. The PDCP layer 1103 is configured to process an RRC message on the control plane, and an Internet protocol (Internet Protocol, IP for short) packet on a user plane. Exemplarily, on the user plane, after obtaining the IP data packets from an upper layer, the PDCP layer 1103 may perform header compression and encryption on the IP data packets, and then transmit processed IP data packets to the RLC layer 1104. The PDCP layer 1103 further provides functions of in-sequence submission and repeated packet detection to the upper layer. On the control plane, the PDCP layer 1103 provides a signaling transmission service for upper-layer RRC, implements encryption and consistency protection of RRC signaling, and implements decryption and consistency check of the RRC signaling in an opposite direction.

RLC is an abbreviation of Radio Link Control, and the RLC layer 1104 is a radio link control layer. The RLC layer 1104 mainly provides a radio link control function, and provides services such as segmentation, retransmission control, and sending on demand for the upper layer. The RLC layer 1104 includes three transmission modes: a transparent mode (Transparent Mode, TM), an unacknowledged mode (Unacknowledged Mode, UM), and an acknowledged mode (Acknowledged Mode, AM), and mainly provides functions such as error correction, segmentation, and recombination.

MAC is an abbreviation of Media Access Control, and the MAC layer 1105 is a media access control layer. The MAC layer 1105 is configured to: provide mapping between a logical channel and a transmission channel; multiplex MAC SDUs from one or more logical channels onto one transport block and transfer the transport block to the PHY layer 1106; demultiplex the transport block transferred from the PHY layer 1106 into a plurality of MAC SDUs and transfer the plurality of MAC SDUs to one or more logical channels; report scheduling information; perform error correction through HARQ; manage priorities among users through dynamic scheduling; manage logical channel priorities, and the like.

The PHY layer 1106 is a physical layer (Physical Layer). The PHY layer 1106 provides mechanical, electronic, functional, and standard features for creating, maintaining, and detaching a physical link required for data transmission. The physical layer can be configured to ensure that original data can be transmitted on various physical media.

As shown in FIG. 11, in this embodiment of this application, the NAS layer 1101, the RRC layer 1102, the PDCP layer 1103, the RLC layer 1104, the MAC layer 1105, and the PHY layer 1106 may be integrated into a first chip module of a terminal. For example, the first chip module may be a modem (modem) of the terminal.

In addition, in some embodiments, an application layer 1107 may further be disposed in the terminal. The application layer 1107 may be disposed on an upper layer of the NAS layer 1101. The application layer may be configured to process and determine signaling from the NAS layer, and deliver communication signaling and data to the NAS layer.

In the example shown in FIG. 11, the application layer 1107 may be disposed in a second chip module of the terminal. For example, the second chip module may be an application processor unit (Application Processor Unit, APU or AP for short) of the terminal.

In some other embodiments, the application layer 1107, the NAS layer 1101, the RRC layer 1102, the PDCP layer 1103, the RLC layer 1104, the MAC layer 1105, and the PHY layer 1106 may alternatively be in the same chip module. The division and configuration of various protocol layers in the terminal are not specifically limited in the embodiments of this application.

FIG. 12 is a schematic diagram of composition of another terminal 1200 according to an embodiment of this application. As shown in FIG. 12, the terminal 1200 may include a processor 1201 and a memory 1202. The memory 1202 is configured to store computer-executable instructions. Exemplarily, in some embodiments, the processor 1201 may cause the terminal 1200 to perform any one of the methods shown in the above embodiments when executing the instructions stored in the memory 1202.

It should be noted that all related content of the steps in the foregoing method embodiments may be cited in function description of corresponding functional modules. Details are not described herein again.

FIG. 13 is a schematic diagram of composition of a chip system 1300. The chip system 1300 may include a processor 1301 and a communication interface 1302, configured for the UE to achieve a function related to the foregoing embodiments. In a possible design, the chip system further includes a memory. The memory is configured to store program instructions and data that are necessary for a terminal. The chip system may include chips, or may include a chip and another discrete device. It should be noted that, in some implementations of this application, the communication interface 1302 may also be referred to as an interface circuit. In a possible implementation, the chip system 1300 may correspond to the first chip module shown in FIG. 11, such as the modem.

It should be noted that all related content of the steps in the foregoing method embodiments may be cited in function description of corresponding functional modules. Details are not described herein again.

All or some of the functions or motions or operations or steps in the foregoing embodiments may be implemented by using software, hardware, firmware, or any combination thereof. When a software program is used to implement the foregoing embodiments, all or some of the foregoing embodiments may be implemented in a form of a computer program product. The computer program product includes one or more computer instructions. When the computer program instructions are loaded and executed on a computer, all or some of the procedures or functions according to the embodiments of this application are produced. The computer may be a general-purpose computer, a special-purpose computer, a computer network, or another programmable apparatus. The computer instructions may be stored in a computer-readable storage medium, or may be transmitted from a computer-readable storage medium to another computer-readable storage medium. For example, the computer instructions may be transmitted from a website, a computer, a server, or a data center to another website, computer, server, or data center in a wired manner (for example, through a coaxial cable, an optical fiber, or a digital subscriber line (digital subscriber line, DSL)) or a wireless manner (for example, in an infrared, radio, or microwave manner). The computer-readable storage medium may be any usable medium accessible to a computer, or a data storage device, such as a server or a data center, integrating one or more usable media. The usable medium may be a magnetic medium (for example, a floppy disk, a hard disk, or a magnetic tape), an optical medium (for example, a DVD), a semiconductor medium (for example, a solid-state drive (solid state disk, SSD)), or the like.

Although this application is described with reference to specific features and the embodiments thereof, it is clear that, various modifications and combinations may be made without departing from the spirit and scope of this application. Correspondingly, the specification and the accompanying drawings are merely example descriptions of this application defined in the appended claims, and are considered as any one of or all modifications, variations, combinations or equivalents that cover the scope of this application. It is clear that, a person skilled in the art can make various modifications and variations to this application without departing from the spirit and scope of this application. In this case, if the modifications and variations made to this application fall within the scope of the claims of this application and their equivalent technologies, this application is intended to include these modifications and variations.

## Claims

1. A communication method, wherein the method is applied to a terminal, and a carrier aggregation CA combination supported by the terminal comprises a first CA combination and a second CA combination; a first radio resource control RRC connection is established between the terminal and a first access network device; and the method comprises:
receiving a first configuration message, wherein the first configuration message comprises a third CA combination; and the first configuration message is used for configuring the third CA combination for the terminal;
sending a first update request when the third CA combination is not supported by the terminal, wherein the first update request is used for triggering the first access network device to query a frequency band and a CA combination that are supported by the terminal;
receiving a first query message, wherein the first query message is used for querying a frequency band and a CA combination that are supported by the terminal; and
sending first capability information in response to the first query message, wherein the first capability information does not comprise a fourth CA combination, and the fourth CA combination comprises the first CA combination or the third CA combination.

2. The method according to claim 1, wherein
the first configuration message comprises a first RRC connection reconfiguration message;
the first update request comprises a first tracking area update request;
the first query message comprises a first terminal capability query message; and
the first capability information comprises first terminal capability information.

3. The method according to claim 1 or 2, wherein that the third CA combination is not supported by the terminal comprises:
the third CA combination comprises a frequency band not supported by the terminal; or
the third CA combination is comprised in a CA combination not supported by the terminal.

4. The method according to claim 3, wherein the frequency band supported by the terminal comprises a first frequency band and a second frequency band, and a frequency band of the third CA combination comprises the second frequency band and a third frequency band; and the terminal does not support the third frequency band; and
the first capability information further does not comprise a fourth frequency band; and the fourth frequency band comprises the first frequency band or the third frequency band.

5. The method according to claim 2 or 4, wherein the first capability information comprises the second CA combination; and after the sending first capability information, the method further comprises:
receiving a second RRC connection reconfiguration message, wherein the second RRC connection reconfiguration message comprises the second CA combination.

6. The method according to claim 2 or 4, wherein
after the sending first capability information, the method further comprises:
receiving a third RRC connection reconfiguration message, wherein the third RRC connection reconfiguration message comprises the third CA combination;
failing to perform a protocol check on the third CA combination in response to the third RRC connection reconfiguration message;
sending a second tracking area update request, wherein the second tracking area update request is used for triggering the first access network device to query a frequency band and a CA combination that are supported by the terminal;
receiving a second terminal capability query message, wherein the second terminal capability query message is used for instructing the terminal to report the supported frequency band and CA combination; and
sending second terminal capability information in response to the second terminal capability query message, wherein the second terminal capability information does not comprise the second CA combination or the fourth CA combination.

7. The method according to claim 2, wherein the frequency band supported by the terminal comprises a first frequency band and a second frequency band, and a frequency band of the third CA combination comprises the second frequency band and a third frequency band; and the terminal does not support the third frequency band; and
after the sending first capability information, the method further comprises:
receiving a fourth RRC connection reconfiguration message, wherein the fourth RRC connection reconfiguration message comprises the third CA combination;
failing to perform a protocol check on the third CA combination in response to the fourth RRC connection reconfiguration message;
sending a third tracking area update request, wherein the third tracking area update request is used for triggering the first access network device to query a frequency band and a CA combination that are supported by the terminal;
receiving a third terminal capability query message, wherein the third terminal capability query message is used to instructing the terminal to report the supported frequency band and CA combination; and
sending third terminal capability information in response to the third terminal capability query message, wherein the third terminal capability information does not comprise a fourth frequency band or the fourth CA combination; and the fourth frequency band comprises the first frequency band or the third frequency band.

8. The method according to claim 7, wherein the third terminal capability information comprises the second CA combination; and after the sending third terminal capability information, the method further comprises:
receiving a fifth RRC connection reconfiguration message, wherein the fifth RRC connection reconfiguration message comprises the second CA combination.

9. The method according to claim 7, wherein after the sending the third terminal capability information, the method further comprises:
receiving a sixth RRC connection reconfiguration message, wherein the sixth RRC connection reconfiguration message comprises the third CA combination;
failing to perform a protocol check on the third CA combination in response to the sixth RRC connection reconfiguration message;
sending a fourth tracking area update request, wherein the fourth tracking area update request is used for triggering the first access network device to query a frequency band and a CA combination that are supported by the terminal;
receiving a fourth terminal capability query message, wherein the fourth terminal capability query message is used for instructing the terminal to report the supported frequency band and CA combination; and
sending fourth terminal capability information in response to the fourth terminal capability query message, wherein the fourth terminal capability information does not comprise the second CA combination or the fourth CA combination.

10. The method according to claim 1 or 2, wherein
the first capability information further does not comprise the second CA combination.

11. The method according to claim 1 or 2, wherein after the sending first capability information, the method further comprises:
receiving a first tracking area update accept message; and
sending a first tracking area update complete message.

12. The method according to claim 4, wherein before the receiving a first configuration message, the method further comprises:
sending a first attach request, wherein the first attach request is used for triggering the first access network device to query a frequency band and a CA combination that are supported by the terminal;
receiving a fifth terminal capability query message, wherein the fifth terminal capability query message is used to instructing the terminal to report the supported frequency band and CA combination; and
sending fifth terminal capability information in response to the fifth terminal capability query message, wherein the fifth terminal capability information comprises the second frequency band, the fourth frequency band, the second CA combination, and the fourth CA combination.

13. The method according to claim 12, wherein after the sending the fifth terminal capability information, the method further comprises:
receiving a first attach accept message; and
sending a first attach complete message.

14. A communication method, wherein the method is applied to a terminal, and a first radio resource control RRC connection is established between the terminal and a first access network device; and the method comprises:
receiving a first configuration message, wherein the first configuration message comprises a fifth CA combination; and the first configuration message is used for configuring the fifth CA combination for the terminal; and
sending a first configuration complete message when the fifth CA combination is not supported by the terminal.

15. The method according to claim 14, wherein the frequency band of the fifth CA combination comprises a fifth frequency band and a sixth frequency band; and that the fifth CA combination is not supported by the terminal comprises:
skipping supporting the fifth frequency band or the sixth frequency band; or
supporting the fifth frequency band and the sixth frequency band, wherein the fifth CA combination is comprised in a CA combination not supported by the terminal.

16. The method according to claim 14 or 15, wherein after the sending a first configuration complete message, the method further comprises:
receiving a first activation instruction, wherein the first activation instruction is used for instructing to activate the fifth CA combination; and
maintaining the fifth CA combination in an inactive state in response to the first activation instruction.

17. The method according to claim 16, wherein
the first configuration message comprises a first RRC connection reconfiguration message; and
the first configuration complete message comprises a first RRC connection reconfiguration complete message.

18. A terminal, wherein the terminal comprises a memory and one or more processors, and the memory is coupled to the processor, wherein
the memory is configured to store computer program code, the computer program code comprises computer instructions, and when the computer instructions are executed by the processor, the terminal is enabled to perform the method according to any one of claims 1 to 13; or when the computer instructions are executed by the processor, the terminal is enabled to perform the method according to any one of claims 14 to 17.

19. A chip system, wherein the chip system comprises a processor and a communication interface; the processor is configured to invoke, from a storage medium, a computer program stored in the storage medium and run the computer program, to perform the method according to any one of claims 1 to 13, or perform the method according to any one of claims 14 to 17.
